Europäisches Patentamt

**European Patent Office**

Office européen des brevets

(19)

(11) Numéro de publication: **0 093 632**
**B1**

(12) # FASCICULE DE BREVET EUROPEEN

(45) Date de publication du fascicule du brevet:
**12.03.86**

(51) Int. Cl.⁴: **F 27 B 15/00,** F 27 B 15/14,
H 05 B 7/00, B 01 J 8/18

(21) Numéro de dépôt: **83400737.9**

(22) Date de dépôt: **13.04.83**

(54) **Procédé et installation de chauffage d'un lit fluidisé par injection de plasma, et applications à la synthèse des oxydes d'azote, à la gazéification d'une substance carbonée et à la réduction des minerais.**

(30) Priorité: **30.04.82 FR 8207530**

(43) Date de publication de la demande:
**09.11.83 Bulletin 83/45**

(45) Mention de la délivrance du brevet:
**12.03.86 Bulletin 86/11**

(84) Etats contractants désignés:
**BE CH DE FR GB IT LI NL SE**

(56) Documents cités:
**FR - A - 2 131 774**
**FR - A - 2 274 197**
**US - A - 2 978 315**
**US - A - 3 216 125**
**US - A - 4 013 415**

(73) Titulaire: **ELECTRICITE DE FRANCE Service National, 2, rue Louis Murat, F-75008 Paris (FR)**

(72) Inventeur: **Amouroux, Jacques, 13bis rue de Villeziers, F-91440 Bure S. Yvette (FR)**
Inventeur: **Cavadias, Siméon, 11 rue Pierre et Marie Curie, F-75005 Paris (FR)**

(74) Mandataire: **Martin, Jean-Jacques et al, Cabinet REGIMBEAU 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de chauffage d'un lit fluidisé, ainsi qu'une installation pour la mise en œuvre de celui-ci, et ses applications à la synthèse des oxydes d'azote, à la gazéification d'une substance carbonée et à la réduction des minerais.

De manière connue, la formation d'un lit fluidisé d'une substance à traiter est obtenue en amenant la substance, en phase solide et divisée sous forme de particules, dans une chambre de traitement, par exemple une colonne verticale, et en injectant en partie basse de cette colonne, en direction axiale, un gaz de fluidisation pour maintenir en mouvement les particules de la substance (voir par exemple le brevet FR-A No 2131774).

On peut ainsi procéder à un certain nombre de réactions chimiques en phase hétérogène avec une efficacité accrue, grâce au mouvement permanent des particules en suspension. Le procédé peut également être utilisé pour des réactions en phase gazeuse, le lit fluidisé étant alors un lit catalytique constitué de particules d'un catalyseur de la réaction. Enfin, il peut également être employé pour des traitements purement physiques tels que l'encapsulage ou le séchage de matériaux.

Si l'on souhaite chauffer à haute température le lit fluidisé, diverses difficultés apparaissent: le chauffage de gaz de fluidisation ne permet pas d'atteindre des températures toujours suffisamment élevées, en raison des limites physiques de résistance des matériaux du système d'injection de ce gaz et de la grille qui est généralement disposée à la base de la colonne pour retenir le lit fluidisé: cet élément est souvent de structure délicate et risque d'être détruit par une température de gaz de fluidisation trop élevée.

Par ailleurs, un chauffage par les parois de la colonne ne peut assurer à la fois une température élevée et une répartition homogène de celle-ci à l'intérieur du lit.

On connaît par ailleurs le mode de chauffage par torche à plasma, employé par exemple dans le dispositif décrit dans le brevet US-A No 4013415, où les torches à plasma chauffent un courant rapide de particules qui passent devant leur embouchure: la puissance thermique élevée des torches à plasma permet de compenser le faible temps de séjour des particules dans le réacteur.

Pour remédier aux inconvénients mentionnés ci-dessus et permettre un chauffage homogène et à haute température d'un lit fluidisé, le procédé de l'invention propose de produire un plasma à partir d'un gaz plasmagène de composition prédéterminée, et à injecter ce plasma dans le lit fluidisé selon au moins une direction inclinée par rapport à l'axe de la colonne de traitement ou perpendiculaire à cet axe, de manière à injecter le plasma directement dans le lit fluidisé, depuis l'extérieur de la colonne et au-dessus de ladite partie basse de celle-ci.

De préférence, chaque direction d'injection est comprise dans un plan radial par rapport à la colonne.

Le plasma est produit par induction haute fréquence ou par arc, et injecté à une pression d'injection de l'ordre de 0,5 à 10 bar; on peut cependant mettre en œuvre le procédé de l'invention avec des pressions supérieures.

L'injection est ainsi réalisée sans perturbation sensible de la fluidisation du lit de particules; l'interpénétration des différentes veines gazeuses (gaz de fluidisation, gaz plasmagène, éventuellement alimentation de la colonne par la substance à traiter) est optimale et le transfert de chaleur gaz plasmagène/particules est très efficace grâce au mouvement permanent des particules, qui restent brassées de manière régulière.

Enfin, les difficultés de tenue aux hautes températures des matériaux, rencontrées dans la technique antérieure, sont ici évitées grâce au fait que le plasma à très haute température reste confiné en une zone s'étendant entre la torche (où est produite la dissociation moléculaire du gaz plasmagène donnant naissance au plasma) et l'intérieur du lit fluidisé (le plasma arrive toujours néanmoins au cœur du lit fluidisé). Les parois de la colonne, ainsi que la grille située à sa base et le dispositif d'alimentation en gaz de fluidisation, restent à l'abri des très hautes températures de l'ordre de 2000 à 3000° C et ne sont soumis qu'à la température périphérique du lit fluidisé.

Le plasma est en effet ici employé comme agent caloporteur intermédiaire qui reçoit la chaleur des moyens de chauffage de la torche (arc électrique, ou torche à plasma hautre fréquence) et la distribue ensuite à la substance à traiter. De ce fait, les différents éléments de l'installation ne sont chauffés que de manière indirecte, à des températures pour lesquelles leur tenue en température est obtenue sans difficulté par des techniques classiques.

Ce chauffage est en outre opéré avec un rendement supérieur à celui des procédés classiques: on constate expérimentalement qu'environ 95% de l'énergie électrique est transmise au plasma, contre un rendement énergétique maximum de 70% pour les meilleurs brûleurs à combustion.

Par ailleurs — et à la différence des procédés classiques de chauffage d'un lit fluidisé par une torche à combustion — la maîtrise de la composition du gaz plasmagène, choisi réducteur ou oxydant selon les applications, permet à celui-ci de participer à la réaction chimique qui a lieu entre le gaz plasmagène, le gaz de fluidisation et le matériau en suspension dans le lit fluidisé. La torche à plasma, outre son aspect énergétique (rôle caloporteur du plasma), joue ainsi un rôle de source chimique pour l'alimentation du réacteur, sans sous-produit toxique ou gênant comme avec les torches à combustion.

Il est possible de procéder à un traitement en continu de matériaux. De préférence, le plasma est injecté par trois torches disposées selon trois directions radiales, sensiblement symétriques, par rapport à l'axe de la colonne; l'alimentation par la substance à traiter peut être effectuée à un niveau voisin de celui des embouchures des torches. L'évacuation de la substance traitée est effectuée au sommet ou à la base du lit fluidisé selon les propriétés acquises par le matériau (augmentation de sa densité, diminution de taille, fragmentation, etc.).

L'invention a également pour objet une installation pour la mise en œuvre du procédé, cette installation étant définie dans les revendications 8 et 9, ainsi que l'utilisation de ce procédé selon les revendications 10 à 12.

D'autres caractéristiques et avantages de l'invention apparaîtront à la lecture de la description détaillée d'un exemple de réalisation ci-dessous, fait en référence aux figures annexées où:

la fig. 1 est une vue en coupe, en élévation, d'une installation selon l'invention, selon la ligne I-I de la fig. 2,

la fig. 2 est une coupe en plan de cette même installation, selon la ligne II-II de la fig. 1,

la fig. 3 est une représentation schématique d'une installation appliquant le procédé de l'invention à la synthèse des oxydes d'azote et à la production d'acide nitrique.

La colonne de traitement 10 est orientée verticalement; elle peut être de forme cylindrique. Le lit de particules 11 est maintenu en suspension au moyen d'un gaz de fluidisation injecté (flèche A) en partie basse de la colonne, en direction axiale, par une conduite 12. Une grille 13 retient le lit fluidisé et l'empêche d'obstruer la conduite 12.

La colonne est doublée intérieurement d'un revêtement réfractaire 18. En outre, il est prévu un refroidissement des parois de la colonne — et en particulier à l'opposé de l'embouchure de la torche à plasma 20 — par exemple par un circuit, symbolisé par la référence 16, dans lequel circule de l'eau.

Il peut être avantageux, par ailleurs, de prévoir un préchauffage du gaz de fluidisation, par exemple au moyen d'une résistance électrique 17 disposée dans la conduite 12.

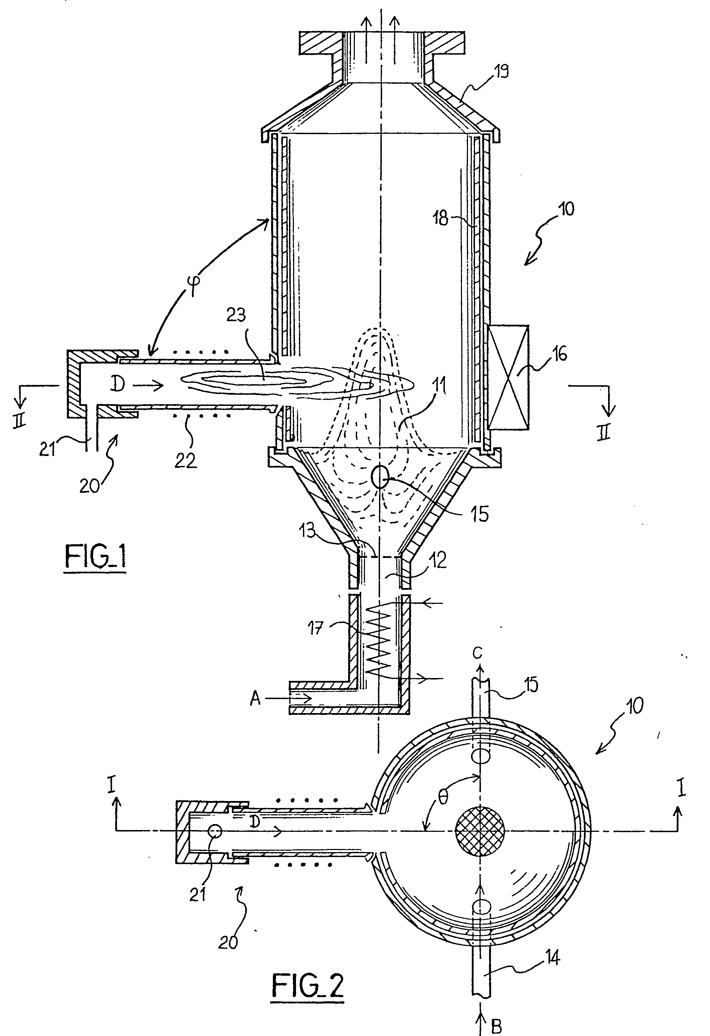

On remarque sur cette fig. 1 que le gaz de fluidisation est injecté, sensiblement dans l'axe de la colonne, par une tubulure de faible section s'évasant jusqu'à atteindre la section de la colonne, selon une disposition classique. Avantageusement, et à la différence de la disposition classique où la grille de retenue est placée au sommet de la partie évasée, on préfère placer cette grille 13 en amont de la partie évasée, c'est-à-dire à un endroit de faible section de la tubulure.

Cela produit un mouvement convectif important du lit fluidisé dans l'axe de la colonne, c'est-à-dire au débouché de la torche à plasma, là où la température est la plus élevée.

La colonne de traitement peut également comporter des canalisations débouchant dans le lit fluidisé, pour l'alimentation 14 avec la substance à traiter (flèche B) et d'évacuation 15 de cette même substance traitée (flèche C). Il est ainsi possible de réaliser un traitement en continu de cette substance. (Au cas où la substance à traiter serait entièrement consommée dans la colonne de traitement, l'évacuation de produits solides de la réaction est inutile, et les conduites 14 et 15 peuvent servir l'une et l'autre à l'alimentation du lit fluidisé.)

Une torche à plasma 20 permet l'injection d'un gaz plasmagène (flèche D) par une canalisation 21. Les molécules de ce gaz sont dissociées en ions positifs et en électrons grâce à un champ électromagnétique à haute fréquence de l'ordre de 10 à 40 GHz produit par des spires inductives 22, de manière à former un plasma 23 à très haute température.

Ce plasma est injecté par la torche sous des angles d'incidence $\varphi$ (par rapport à l'axe de la colonne) et $\vartheta$ (par rapport à la direction d'alimentation de la substance à traiter) qui peuvent varier en fonction des paramètres de travail à l'intérieur du lit de particules maintenu en suspension.

De préférence, la direction d'injection du plasma forme un angle $\varphi$ compris entre 45 et 90° (lorsque l'on utilise plusieurs torches, il est souhaitable d'éviter qu'elles se contrarient entre elles, ce qui serait le cas pour un angle $\varphi$ voisin de 90°) et un angle $\vartheta$ compris entre 30 et 90°.

En variante, pour obtenir des quantités de chaleur plus importantes, il est possible de produire le plasma non pas par induction haute fréquence, mais par un arc électrique obtenu entre deux électrodes. En variante également, il est possible d'utiliser une pluralité de torches à plasma, par exemple trois torches disposées avec un même angle $\varphi$ par rapport à l'axe de la colonne, mais réparties régulièrement autour de celle-ci avec une symétrie radiale à 120°.

Enfin, les gaz (gaz de fluidisation, réactifs gazeux, etc.) sont évacués au sommet 19 de la colonne.

*Exemple I:*

Dans une réalisation de l'invention, la torche à plasma était composée d'un tube en quartz de 30 mm de diamètre avec 5 spires inductives situées à une distance de 10 mm du lit fluidisé, alimentée par un générateur haute fréquence 40 MHz commercialisé par la société Durr. Un tel générateur permet en particulier de réaliser des plasmas d'air à faible puissance (2 à 4 kW).

Le plasma, qui était un plasma d'argon ou d'air, était injecté à une pression voisine de la pression atmosphérique avec des débits variables de 10 à 30 l/min.

Le lit fluidisé était maintenu dans une enceinte en quartz de 80 mm de diamètre par une grille de toile métallique. La fluidisation des particules était assurée par un gaz de débit fonction de la taille et de la densité des particules.

Le procédé et l'installation selon l'invention sont applicables à de nombreux traitements de matériaux, dont on décrira ci-dessous trois exemples (non limitatifs); on peut également envisager des traitements purement physiques tels que le séchage ou l'encapsulage des matériaux.

*Exemple II:*

En premier lieu, l'invention peut être appliquée à la synthèse des oxydes d'azote par trempe en lit catalytique. Dans ce cas, le gaz de fluidisation est l'oxygène ou l'air, et le gaz plasmagène est l'azote ou un mélange azote/oxygène (air enrichi en oxygène). La substance granulaire constituant le lit fluidisé est alors un catalyseur de la réaction d'oxydation de l'azote. Le choix des débits et compositions des gaz de fluidisation et plasmagène permet d'optimiser les quantités respectives d'azote et d'oxygène injectées dans le réacteur. Il permet également d'ajuster le gradient de température entre la température du mélange à l'endroit où il est chauffé par le plasma (de l'ordre de 2000 à 5000° C) et la température moyenne du lit de catalyseur, là où se produit la trempe (de l'ordre de 1000° C).

Le lit fluidisé catalytique sous plasma assure ainsi la triple fonction de mélangeage des réactifs (par effet mécanique d'entraînement), de catalyse de la réaction chimique, et enfin de trempe du mélange réactionnel dans le réacteur agité.

Plus précisément, il était utilisé une installation telle que celle décrite dans l'exemple I, des débits de gaz de fluidisation de 12 l/min, de gaz plasmagène de 13 l/min, produisant donc un débit de sortie des gaz de 25 l/min au sommet de la colonne (les débits indiqués sont ramenés aux conditions normales de température et de pression).

Dans une hypothèse du recyclage des gaz chauds en sortie du réacteur, il était introduit un chauffage préalable du gaz de fluidisation par une résistance électrique de 250 W contrôlée par un rhéostat. Une enceinte métallique autour du tube en quartz assurait l'étanchéité du dispositif.

Comme catalyseur, il était utilisé 4% NiO, 25% $WO_3$ sur support d'alumine. La granulométrie était choisie entre 207 et 250 µm. La quantité employée était de 50 g. Un exemple de composition des gaz à l'entrée et à la sortie du réacteur est donné dans le tableau suivant:

|  | Entrée du réacteur (l/min) | | | Sortie du réacteur (l/min) |
| --- | --- | --- | --- | --- |
|  | Gaz Plasmagène | Gaz de Fluidisation | Gaz Total | |
| $NO_2$ | 0 | 0 | 0 | 0,7 |
| $N_2$ | 7 | 6 | 13 | 12,5 |
| $O_2$ | 6 | 6 | 12 | 11,8 |

Compte tenu de ces débits et de la puissance effective de la torche qui était de 3 kW, l'énergie induite était dans cet exemple de 2,1 kcal/l de gaz total et l'énergie de formation était de 20 kWh/kg de $HNO_3$.

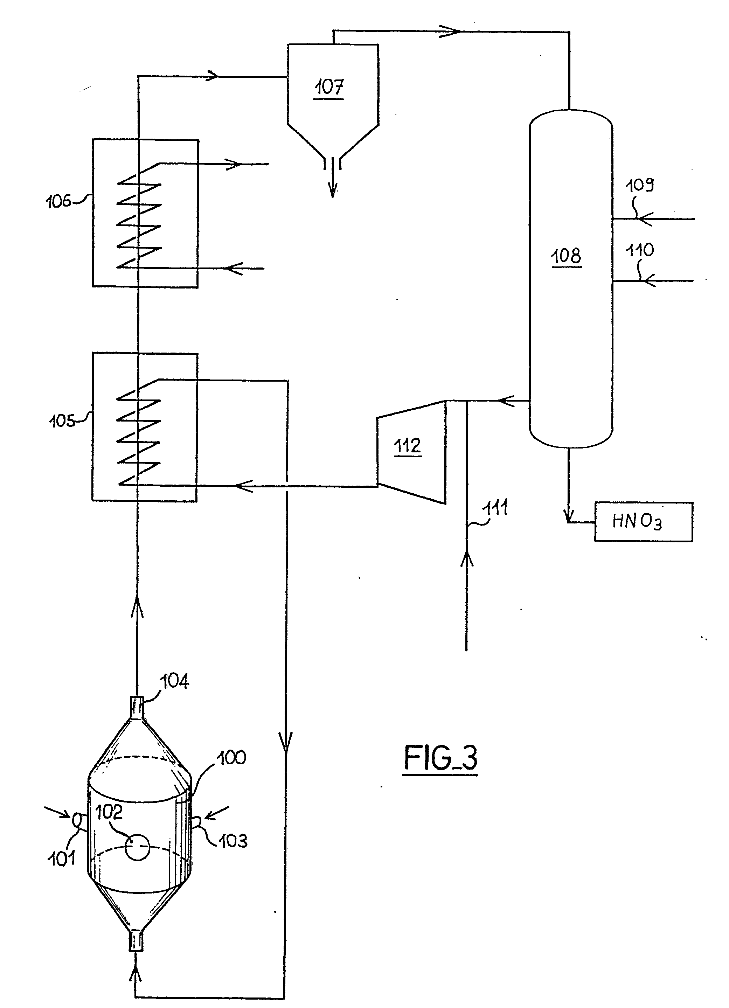

La fig. 3 représente schématiquement une installation de production d'oxydes d'azote et de $HNO_3$ par ce procédé: le réacteur 100 sous lit fluidisé est chauffé par exemple par trois torches à plasma 101, 102, 103, le gaz plasmagène étant l'air. Les produits gazeux sont extraits par une conduite 104 jusqu'à un premier échangeur thermique 105 à haute température (1500 à 2000° C) où ils cèdent une partie de leur chaleur au gaz de fluidisation, assurant ainsi le préchauffage de ce dernier. Un second échangeur thermique 106 à moyenne température (1000 à 1500° C) assure un refroidissement supplémentaire des produits gazeux, tout en permettant accessoirement, par exemple, la production de vapeur haute pression pour des usages divers.

Les produits gazeux (dont la température est alors abaissée à une valeur inférieure à 300° C) sont ensuite dirigés vers un séparateur à cyclone 107 qui récupère les fines particules du lit fluidisé entraînées et restées en suspension dans les produits gazeux. Ces derniers sont alors dirigés vers une tour de lavage 108 alimentée en air et en eau par des conduites 109 et 110. Dans cette tour de lavage, les oxydes d'azote sont transformés en acide nitrique. Par ailleurs, l'atmosphère de la tour de lavage (air ou mélange azote/oxygène) est extraite et enrichie en proportions convenables par de l'air ou de l'oxygène amenés par une conduite 111. Le mélange résultant est comprimé dans un compresseur 112, puis réchauffé dans l'échangeur haute température 105 précité avant d'être réinjecté dans le réacteur 100, dont il constitue le gaz de fluidisation.

*Exemple III:*

En second lieu, l'invention peut être appliquée à la gazéification d'une substance carbonée (par exemple la houille) par vapocraquage. Le gaz de fluidisation est alors de la vapeur d'eau déjà surchauffée (de façon classique) et le gaz plasmagène est l'hydrogène (ou un mélange vapeur d'eau/hydrogène), constituant le gaz réducteur. De cette façon, la composition chimique du gaz à l'entrée du réacteur peut avoir un rapport $H_2/O_2$ variant entre 2 et 5.

Le lit fluidisé est constitué par la substance carbonée mise sous forme granulaire (300 à 800 µm) par un broyage préalable. La température du lit fluidisé est de l'ordre de 2000 à 2500° C (assurant une pyrolyse plus rapide et l'absence de résidus goudrons) pour une température du plasma de l'ordre de 4000 à 6000° C (la fragmentation de la molécule d'eau est efficace à partir de 3000° C).

A la différence de l'application précédente, le lit fluidisé est ici consommé par le plasma. Il y a donc lieu de prévoir une alimentation en continu du lit. Un tel fonctionnement en continu n'était pas possible par des techniques classiques, dans lesquelles il était nécessaire d'alterner des cycles de chauffage de la substance carbonée par le brûleur avec des cycles de chauffage de la vapeur.

Les gaz à la sortie du réacteur contiennent essentiellement de l'hydrogène, de l'acétylène, du monoxyde d'azote et de l'éthylène.

Lorsque, à la sortie du réacteur, on retrouve des particules fines qui résultent des particules de la houille après réaction avec les gaz et réduction progressive de leur taille, ces particules peuvent être récupérées aisément par un séparateur à cyclone.

Ce procédé permet un taux de transformation de la houille de l'ordre de 90%.

*Exemple IV:*

En troisième lieu, l'invention peut être appliquée à la réduction des minerais ou d'autres matériaux sous forme de granulats. Ces matériaux sont amenés de façon continue dans le lit fluidisé, de manière à être chauffés par le plasma jusqu'à une température permettant la réduction, le gaz plasmagène étant un gaz réducteur tel que l'hydrogène.

## Revendications

1. Un procédé de chauffage d'un lit fluidisé, dans lequel une substance sous forme granulaire est amenée dans une colonne verticale de traitement et maintenue en suspension dans celle-ci par injection axiale d'un gaz de fluidisation en partie basse de la colonne, caractérisé en ce qu'il consiste à produire un plasma à partir d'un gaz plasmagène de composition prédéterminée, et à injecter ce plasma dans le lit fluidisé selon au moins une direction inclinée par rapport à l'axe de la colonne de traitement ou perpendiculaire à cet axe, de manière à injecter le plasma directement dans le lit fluidisé, depuis l'extérieur de la colonne et au-dessus de ladite partie basse de celle-ci.

2. Un procédé selon la revendication 1, caractérisé en ce que chaque direction d'injection du plasma est comprise dans un plan radial par rapport à la colonne de traitement.

3. Un procédé selon la revendication 2, caractérisé en ce que la pression d'injection du plasma est comprise entre 0,5 et 10 bar.

4. Un procédé selon l'une des revendications 1 à 3, caractérisé en ce que chaque direction d'injection du plasma forme avec l'axe de la colonne de traitement un angle ($\varphi$) compris entre 45 et 90°.

5. Un procédé selon l'une des revendications 2 à 4, caractérisé en ce que la direction d'amenée de la substance granulaire dans la colonne de traitement forme un angle ($\vartheta$) compris entre 30 et 90° avec le plan radial comprenant une direction d'injection du plasma.

6. Un procédé selon l'une des revendications 2 à 5, caractérisé en ce que le plasma est injecté selon trois directions radiales, sensiblement symétriques par rapport à l'axe de la colonne de traitement.

7. Un procédé selon l'une des revendications 1 à 6, caractérisé en ce que la substance granulaire est amenée dans le lit fluidisé et extraite de celui-ci de façon continue.

8. Une installation pour la mise en œuvre du procédé selon l'une des revendications 1 à 7, du type comportant:
— une colonne (10) verticale de traitement;
— une conduite (12) d'injection en direction axiale d'un gaz de fluidisation en partie basse de la colonne;
— une conduite (14) d'alimentation de la colonne par une substance sous forme granulaire, caractérisée en ce qu'est en outre prévue une torche à plasma (20) produisant un plasma à partir d'un gaz plasmagène et injectant ce plasma dans le lit fluidisé (11) selon au moins une direction inclinée par rapport à l'axe de la colonne de traitement ou perpendiculaire à cet axe, ladite conduite d'alimentation (14) étant disposée à un niveau voisin de celui auquel est injecté le plasma dans le lit fluidisé.

9. Une installation selon la revendication 8, caractérisée en ce que le gaz de fluidisation est injecté, sensiblement dans l'axe de la colonne de traitement (10), par une tubulure (12) de faible section s'évasant jusqu'à atteindre la section de la colonne de traitement, et en ce qu'il est prévu une grille (13) de retenue du lit fluidisé placée à l'embouchure de ladite tubulure (12) en amont de la partie évasée.

10. Une application du procédé selon l'une des revendications 1 à 7 à la synthèse des oxydes d'azote, caractérisée en ce que le gaz de fluidisation est l'air ou l'oxygène, en ce que le gaz plasmagène est l'azote ou un mélange azote/oxygène et en ce que la substance granulaire est un catalyseur de la réaction d'oxydation de l'azote.

11. Une application du procédé selon l'une des revendications 1 à 7 à la gazéification d'une substance carbonée par la vapeur d'eau, caractérisée en ce que cette substance carbonée, après mise sous forme granulaire par broyage préalable, est amenée de façon continue dans le lit fluidisé, en ce que le gaz plasmagène contient de l'hydrogène et en ce que la vapeur d'eau est amenée sous forme de gaz de fluidisation.

12. Une application du procédé selon l'une des revendications 1 à 7 à la réduction d'une substance sous forme granulaire, caractérisée en ce que cette substance est amenée de façon continue dans le lit fluidisé, et en ce que la gaz plasmagène contient de l'hydrogène.

## Patentansprüche

1. Verfahren zum Heizen eines Fluidisierbettes, in welchem ein Granulat in einer vertikalen Behandlungskolonne durch axiales Einblasen eines Fluidisiergases in die untere Partie der Kolonne in Suspension gehalten ist, dadurch gekennzeichnet, dass ein Plasma ausgehend von einem plasmaerzeugenden Gas einer vorbestimmten Zusammensetzung erzeugt wird, dass dieses Plasma in das Fluidisierbette mindestens in einer bezüglich der Achse der Behandlungskolonne geneigten oder senkrechten Richtung so eingeblasen wird, dass das Plasma direkt in das Fluidisierbett injiziert wird, und zwar von ausserhalb der Kolonne und oberhalb deren unterer Partie.

2. Verfahren nach Anspruch 1, dadurch gekennzeichnet, dass jede Einblasrichtung des Plasmas in einer Radialebene bezüglich der Behandlungskolonne gelegen ist.

3. Verfahren nach Anspruch 2, dadurch gekennzeichnet, dass der Einblasdruck des Plasmas zwischen 0,5 und 10 bar beträgt.

4. Verfahren nach einem der Ansprüche 1 bis 3, dadurch gekennzeichnet, dass jede Einblasrichtung des Plasmas mit der Achse der Behandlungskolonne einen Winkel ($\varphi$) zwischen 45 und 90° bildet.

5. Verfahren nach einem der Ansprüche 2 bis 4, dadurch gekennzeichnet, dass die Zuführrichtung des Granulats in die Behandlungskolonne einen Winkel ($\vartheta$) zwischen 30 und 90° mit der Radialebene bildet, welche eine Einblasrichtung des Plasmas enthält.

6. Verfahren nach einem der Ansprüche 2 bis 5, dadurch gekennzeichnet, dass das Plasma in drei radialen Richtungen eingeblasen wird, die im wesentlichen symmetrisch bezüglich der Achse der Behandlungskolonne verlaufen.

7. Verfahren nach einem der Ansprüche 1 bis 6, dadurch gekennzeichnet, dass das Granulat in das Fluidisierbett kontinuierlich eingebracht und daraus abgezogen wird.

8. Anlage zum Durchführen des Verfahrens nach einem der Ansprüche 1 bis 7 mit:
— einer vertikalen Behandlungskolonne (10),
— einer axial angeordneten Einblasleitung (12) für Fluidisiergas in der unteren Partie der Kolonne,
— einer Speiseleitung (14) für eine granulatförmige Substanz in die Kolonne,
dadurch gekennzeichnet, dass ferner ein Plasmabrenner (20) zum Erzeugen eines Plasmas ausgehend von einem plasmaerzeugenden Gas vorgesehen ist, der das Plasma in das Fluidisierbett (11) längs mindestens einer bezüglich der Achse der Behandlungskolonne geneigten oder senkrechten Richtung einbläst, wobei die genannte Speiseleitung (14) auf einem Niveau benachbart dem Einspritzniveau des Plasmas in das Fluidisierbett angeordnet ist.

9. Anlage nach Anspruch 8, dadurch gekennzeichnet, dass das Fluidisiergas exakt in der Achse der Behandlungskolonne (10) über ein ausgehend von einem kleinen Querschnitt bis auf den Querschnitt der Behandlungskolonne erweitertes Rohrstück eingeblasen wird und dass ein Rückhaltegitter (13) für das Fluidisierbette am Ansatz des Rohrstückes (12) stromaufwärts von der erweiterten Partie angeordnet ist.

10. Anwendung eines Verfahrens nach einem der Ansprüche 1 bis 7 auf die Synthese von Stickoxiden, dadurch gekennzeichnet, dass das Fluidisiergas Luft oder Sauerstoff ist, dass das plasmaerzeugende Gas Stickstoff oder ein Gemisch aus Stickstoff und Sauerstoff ist und dass das Granulat ein Katalysator für die Oxidation von Stickstoff ist.

11. Anwendung eines Verfahrens nach einem der Ansprüche 1 bis 7 auf die Vergasung einer kohlenstoffhaltigen Substanz mittels Wasserdampf, dadurch gekennzeichnet, dass die kohlenstoffhaltige Substanz nach dem Bringen in die Granulatform durch Zerkleinern kontinuierlich in das Fluidisierbett eingespeist wird, dass das plasmaerzeugende Gas Wasserstoff enthält und dass der Wasserdampf als Fluidisiergas zugeführt wird.

12. Anwendung eines Verfahrens nach einem der Ansprüche 1 bis 7 auf die Reduktion eines Granulates, dadurch gekennzeichnet, dass dieses Granulat kontinuierlich in das Fluidisierbette eingeführt wird und dass das plasmaerzeugende Gas Wasserstoff enthält.

## Claims

1. A process for heating a fluidised bed, comprising bringing a substance in the form of particles into a vertical treatment column, keeping said particles in suspension therein by the axial injection of fluidising gas into the bottom part of the column, characterized by producing a plasma from a plasmagenic gas of predetermined composition, and injecting said plasma into the fluidised bed in at least one direction, said direction forming an angle with respect to the axis of the treatment column or being perpendicular to said axis, thereby injecting the plasma directly into the fluidised bed, from the outside of the column and above said bottom part of the column.

2. A process according to Claim 1, characterized in that each direction of injection of the plasma is within a radial plane relative to the treatment column.

3. A process according to Claim 2, characterized in that the plasma injection pressure is between 0.5 and 10 bar.

4. A process according to any one of Claims 1 to 3, characterized in that each direction of injection of the plasma forms an angle ($\varphi$) of between 45 and 90° with the axis of the treatment column.

5. A process according to any one of Claims 2 to 4, characterized in that the direction in which the particulate substance is brought into the treatment column forms an angle ($\vartheta$) of between 30 and 90° with the radial plane comprising one direction of injection of the plasma.

6. A process according to any one of Claims 2 to 5, characterized in that the plasma is injected in three substantially symmetrical, radial directions, relative to the axis of the treatment column.

7. A process according to any one of Claims 1 to 6, characterized in that the particulate substance is brought into the fluidised bed and extracted therefrom continuously.

8. An installation for carrying out the process according to any one of Claims 1 to 7, comprising:
— a vertical treatment column (10),
— a pipe (12) for injecting a fluidising gas into the bottom part of the column, in the axial direction, and
— a pipe (14) for feeding the column with a substance in the form of particles,
characterized by further comprising a plasma torch (20) for producing a plasma from a plasmagenic gas and for injecting said plasma into the fluidised bed (11) contained in said column in at least one direction forming an angle with respect to the axis of the treatment column or being perpendicular to said axis, said feeding pipe (14) being located at a level near that at which the plasma is injected into the fluidised bed.

9. An installation according to Claim 8, characterized in that the fluidising gas is injected, approximately along the axis of the treatment column (10) by means of a tube (12) of small cross-section which widens until it reaches the cross-section of the treatment column, and including a grid (13) located at the mouth of said tube (12), upstream of the widened part.

10. A use of the process according to any one of Claims 1 to 7 for the synthesis of nitrogen oxides, characterized in that the fluidising gas is air or oxygen, the plasmagenic gas is nitrogen or a nitrogen/oxygen mixture and the particulate substance is a catalyst for a nitrogen oxidation reaction.

11. A use of the process according to any one of Claims 1 to 7 for the gasification of the carbonaceous substance by means of steam, characterized in that a carbonaceous substance is brought into the form of particles by prior grinding and is brought continuously into the fluidised bed, in that the plasmagenic gas contains hydrogen and in that the fluidising gas comprises steam.

12. A use of the process according to any one of Claims 1 to 7 for the reduction of a substance in the form of particles, characterized in that said substance is brought continuously into the fluidised bed and in that plasmagenic gas contains hydrogen.

0 093 632

FIG_1

FIG_2

FIG_3